# EUROPEAN PATENT APPLICATION

(11) **EP 0 571 098 A1**
(43) Date of publication of application: **24.11.1993**
(21) Application number: 93303450.6
(22) Date of filing: 04.05.1993
(51) Int. Cl.: B60R 1/08

(54) **Rear view mirror**

(30) Priority: 13.05.1992 GB 9210294
(71) Applicant: BRITAX (GECO) S.A., F-77981 St. Fargeau-Ponthierry Cédex (FR)
(72) Inventor: Carbonel, Michel, F-772740 Champs S/Marne (FR)
(74) Representative: Hollinghurst, Antony

(57) **Abstract**

A rear view mirror assembly for a motor vehicle has a main reflective surface (12), a PDLC film (18) disposed in front of the main reflective surface (12), a transparent plate (14) of which one surface forms a semi-reflective layer (16) positioned in front of the PDLC film (18). A first electrode (20) on one side of the PDLC film (18) and a second electrode (22) on the other side of the PDLC film (18), so that an electrical signal applied to the first and second electrodes (20, 22) varies the percentage of the light incident on the mirror assembly which is reflected thereby.

## Description

This invention relates to a rear view mirror assembly for a motor vehicle of the type having a main reflective surface, a liquid crystal layer disposed in front of the main reflective surface, a transparent plate of which one surface forms a semi-reflective layer positioned in front of the liquid crystal layer, a first electrode on one side of the liquid crystal layer, a second electrode on the other side of the liquid crystal layer, and means for applying an electrical signal to the first and second electrodes to vary the percentage of the light incident on the mirror assembly which is reflected thereby.

With this type of mirror, a small percentage (typically 4%) is reflected from this front glass layer. When the liquid crystal layer is in its maximum transmissive state, a higher percentage of the incident light is reflected from the main reflective surface. The liquid crystal layer has indium tin oxide electrodes on both surfaces and, dependent on the voltage applied, the reflection coefficient of the mirror assembly varies from 55% to 15% dependent on the voltage applied. It is difficult to provide a homogeneous liquid crystal layer of uniform thickness. Consequently, a reflection coefficient which is uniform over the whole area of the mirror assembly is achieved only when either no voltage is applied or when sufficient voltage is applied to obtain minimum reflection coefficient over the whole mirror assembly; intermediate voltages tend to produce non-uniform grey colours. Indium tin oxide electrodes are relatively expensive.

One known form of liquid crystal layer is a polymer dispersed liquid crystal film (hereinafter called a PDLC film). A method of making a PDLC film is disclosed in US-A-4944576. Such a film is substantially completely opaque when no voltage is applied and can have a transmission coefficient of more than 90% when an alternating voltage is applied.

According to the invention, in a rear view assembly of the type described above, the liquid crystal layer is a PDLC film.

Preferably, the main reflective layer is made of an electrically conductive material and serves as the first electrode. Similarly, the semi-reflective layer may be formed on the surface of the transparent plate facing the PDLC film and may be made of an electrically conductive material so as to serve as the second electrode.

The semi-reflective layer preferably has a reflection coefficient between 10% and 20%.

In order to enable the mirror assembly to be used in the event of an electrical failure, a preferred form of the invention has means for mechanically removing the PDLC film from in front of the main reflective layer.

An embodiment of the invention will now be described, by way of example, with reference to the accompanying drawings, in which:
Figure 1 is a scrap cross-sectional view of part of a mirror glass unit for a rear view mirror assembly in accordance with the invention;
Figures 2 and 3 are ray diagrams illustrating the operation of the unit shown in Figure 1;
Figure 4 is a scrap cross-sectional view of part of an alternative mirror glass unit for a rear view mirror assembly in accordance with the invention:
Figure 5 is an elevational view from the driver's side of an interior rear view mirror assembly in accordance with the invention;
Figure 6 is a cross-sectional view taken on the line 6-6 in Figure 5;
Figure 7 is a cross-sectional view, similar to Figure 6, of an alternative embodiment of the invention; and
Figures 8 to 11 are waveform diagrams of electrical signals applied to the PDLC film.

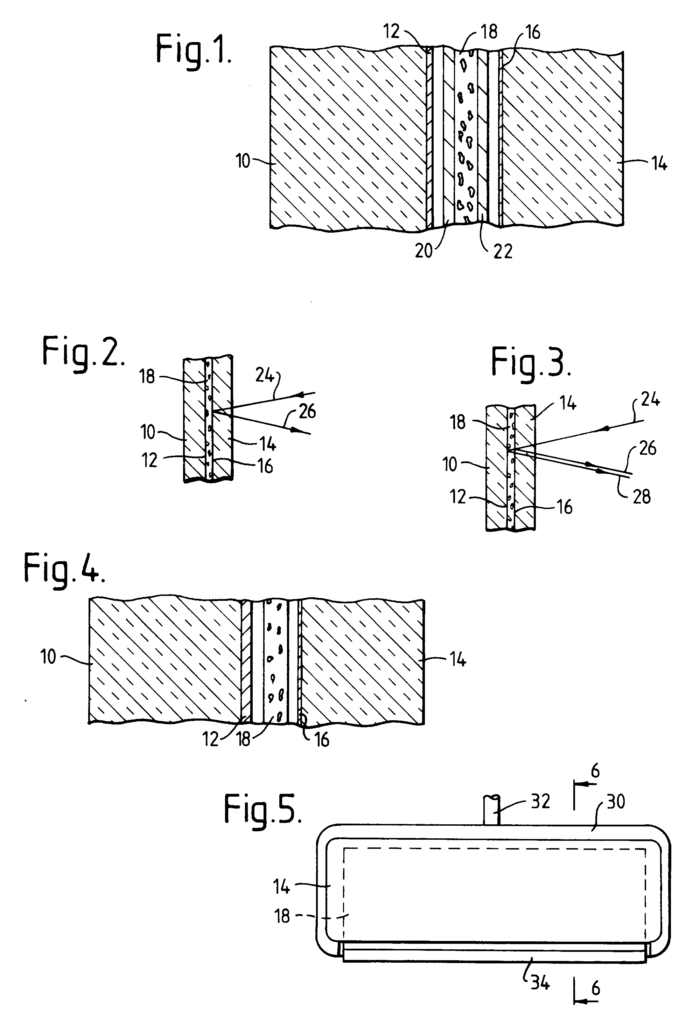

Referring to Figure 1, the mirror glass unit of a rear view mirror assembly in accordance with the invention consists of a first glass layer 10 having a 100% reflective layer 12 on its outer surface. Spaced apart from but parallel to the glass layer 10 is a parallel-sided front glass layer 14 with a 15% semi-reflective layer 16 on its inner surface.

In accordance with the invention, a PDLC sheet 18 is disposed in the air gap between the two glass layers 10 and 14. The film 16 has transparent electrodes 20 and 22 on its two sides, consisting of vacuum-deposited indium tin oxide.

Referring to Figure 2, when no voltage is applied between the electrodes 20 and 22, the layer 18 is substantially opaque. An incident light ray 24 has 15% of its light reflected from the semi-reflective layer 16 as a ray 26 and the remaining 85% absorbed by the PDLC layer 18.

When an alternating voltage is applied to the electrodes 20 and 22 then, as shown in Figure 3, 15% of the incident ray 24 is still reflected by the semi-reflective layer 16 and the remaining 85% is reflected by the silvered layer 12 to form a second ray 28. Since the thickness of the PDLC film 18 is only about 20 microns, the air gap between the two glass layers 10 and 14 can be made relatively thin with the result that the two rays 26 and 28 are almost coincident and no perceptible double image is produced.

Figure 4 illustrates an alternative mirror glass unit in which the 100% reflective layer 12 and the 15% semi-reflective layer 16 are both formed of electrically conductive material and serves as the first and second electrodes respectively. The separate electrodes 20 and 22 of Figure 1 are then not necessary.

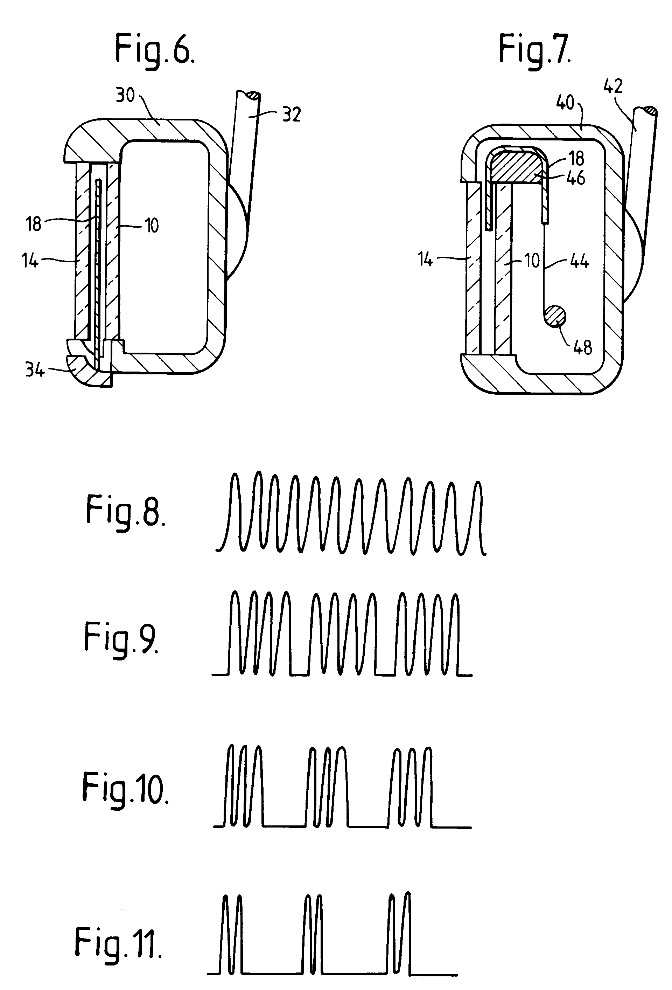

Figure 5 shows an interior rear view mirror in accordance with the invention, comprising a case 30 mounted on a stem 32 and containing the mirror unit shown in Figure 4 with the glass layer 10 facing the inside of the case 30. The PDLC film is slidably mounted in the air gap on a detachable section 34 of the rim surrounding the opening in the case 30. In the event of failure of the electrical system, the section 34 can be pulled away to completely remove the PDLC film 18. The mirror shown in Figures 5 and 6 then functions in the manner illustrated in Figure 3.

Figure 7 illustrates an alternative embodiment consisting of an interior mirror unit of the type shown in Figure 1 mounted in a mirror case 40 which has a mounting stem 42. At its upper edge, the PDLC layer 18 is attached to a flexible web 44 which is led round a guide 46 (which also serves as part of the mounting for the glass layer 10) and on to a roller 48 journalled between the side walls of the case 40. The roller 48 projects through one side wall and has a knob (not shown) mounted on its exposed end. Rotation of this knob winds the web 44 on to the roller 48, pulling the PDLC film out of the gap between the glass layers 10 and 14.

If it is desired to obtain a reflection coefficient between 15% and 100%, the electrical voltage may be applied as a series of pulses with the pulse width determining the percentage of light reflected from the reflective layer 12. Figure 8 shows the voltage waveform required to produce maximum reflectivity. Figure 9 shows the voltage waveform required to produce 75% reflectivity. Figure 10 shows the voltage waveform required to produce 50% reflectivity, Figure 11 shows the voltage waveform required to produce 25% reflectivity. Of course, if zero reflectivity is required, then no voltage is applied. In order to avoid the production of a flickering effect, the pulse repetition frequency must be greater than 10Hz. PDLC films have a sufficiently fast response time to permit a sufficiently high frequency to be used.

The invention is also applicable to exterior vehicle mirrors.

## Claims

1. A rear view mirror assembly for a motor vehicle having a main reflective surface (12), a liquid crystal layer (18) disposed in front of the main reflective surface (12), a transparent plate (14) of which one surface forms a semi-reflective layer (16) positioned in front of the liquid crystal layer (18), a first electrode (20) on one side of the liquid crystal layer (18), a second electrode (22) on the other side of the liquid crystal layer (18), and means for applying an electrical signal to the first and second electrodes (20, 22) to vary the percentage of the light incident on the mirror assembly which is reflected thereby, characterised in that the liquid crystal layer is a PDLC film (18).

2. A rear view mirror assembly according to claim 1, wherein the main reflective surface (12) is made of an electrically conductive material and serves as the first electrode.

3. A rear view mirror assembly according to claim 1 or 2, wherein the semi-reflective layer (16) is formed on the surface of the transparent plate (14) facing the PDLC film (18) and is made of an electrically conductive material to serve as the second electrode (22).

4. A rear view mirror assembly according to claim 1, 2 or 3, wherein the semi-reflective layer (16) has a reflection coefficient between 10% and 20%.

5. A rear view mirror assembly according to claim 1, 2, 3 or 4, further comprising means (34, 48) for mechanically removing the PDLC film from in front of the main reflective surface (12).
